# EUROPEAN PATENT SPECIFICATION

(11) **EP 2 243 756 B1**
(45) Date of publication and mention of the grant of the patent: **09.09.2015**
(21) Application number: 09705329.2
(22) Date of filing: 29.01.2009
(51) Int. Cl.: G04B 37/22, C04B 35/486, C04B 35/488

(54) **WHITE CERAMIC**
WEISSE KERAMIK
CÉRAMIQUE BLANCHE

(30) Priority: 29.01.2008 JP 2008017101
(43) Date of publication of application: 27.10.2010
(73) Proprietor: Kyocera Corporation, Kyoto-shi Kyoto 612-8501 (JP)
(72) Inventor: MIKAKI, Shunji, Satsumasendai-shi Kagoshima 895-0292 (JP)
(74) Representative: Hoffmann Eitle
(86) International application number: PCT/JP2009/051485
(87) International publication number: WO 2009/096478

(56) References cited:
- WO-A1-2007/108416
- JP-A- 2005 170 719
- JP-A- 2005 306 664

## Description

### TECHNICAL FIELD

The present invention relates to a ceramic that shows a white color which gives an impression of cleanliness and a decorative article which represents such a white color.

### BACKGROUND ART

Conventionally, a white color is used for various livingwares as a color which gives an impression of cleanliness and remains firm favorites in various fields of various products. Such a tendency is not an exception in the field of the various accessories in which the color of a product serves as an important factor of product selection, so that the products such as case of a watch and links of a watchband representing white color enjoy high popularity.

Moreover, according to the research relating to the mobile phone, the user population of which has explosively increased in recent years, it is reported that the users select the model of the phone on the basis of the "color" ranks number two following the "design or form" in the basis of model selection, so that the white color is always ranked high among the favorite colors. Furthermore, in these days, the luxury brand makers have also entered into the commercial market of the mobile phone. Then, a ceramic that represents the white color, which gives an impression of a high grade feeling, is required for the various operation keys of the mobile phone bearing the name of the brand maker.

To satisfy such a market request, there are alumina, magnesia, zirconia and so on as a ceramic that represents white color, wherein zirconia is especially abundantly used as the decorative article, since it has a high fracture toughness and a high durability against an impact when the article would be fallen.

The present applicant has already proposed a dial face of a watch comprising a white zirconia ceramic, which comprises zirconia as the main component that contains alumina, which is partially stabilized by a stabilizer comprising one or more components selected from Y₂O₃, MgO, CaO and CeO₂, and which has a lightness (L*) of not less than 88 in an L*a*b* color system as shown in Patent Document 1.

Patent Document 2 describes a zirconia ceramics comprising 0.35 wt.-% Al₂O₃ and Y₂O₃, whereby the molar ratio of Y₂O₃ : ZrO₂ is 2.0 : 98.0. This document further describes a ceramics comprising 3.72 wt.-% Al₂O₃ and Y₂O₃, whereby the molar ratio Y₂O₃ : ZrO₂ is 4.7 : 95.3.

Patent Document 3 discloses a method for manufacturing high-purity zirconium hydroxide by reducing Fe content to provide zirconium oxide having an extremely high lightness and whiteness. In the zirconium hydroxide powder, values L*, a* and b* of the L*a*b* color system, designated in JIS Z 8729, satisfy the following relationships: L* ≥ 95, -1 < a* < 1 and -5 < b* < 5.
Patent Document 1: Japanese Patent Publication 2000-75053
Patent Document 2: Japanese Patent Application 2005-306664 A
Patent Document 3: Japanese Patent Application 2005-170719 A

### DISCLOSURE OF THE INVENTION

### PROBLEMS TO BE SOLVED BY THE INVENTION

The white zirconia ceramic disclosed by Patent Document 1 is suitable as the dial face that is used for the watches driven by a solar cell, which has a built-in power source such as a solar cell which transforms light energy into electrical energy, since it has a light transmittance and a high transparency. However, in the case where such a white zirconia ceramic having such a light transmittance and a high transparency is used as the various operation keys or the casing which constructs a housing of the mobile phone, there are problems that the color tone of the mobile phone darkens, and the impression of a high grade feeling thereof may be possibly lost, since the inside of the mobile phone can be seen through the various operation keys and/or the casing that constructs the housing thereof, which are made of the white zirconia ceramic.

An object of the present invention is to provide a which ceramic, which has a low light transmittance even when a wall thickness of the ceramic is made thin, which gives a high grade feeling, a feeling of aesthetic satisfaction, spiritual comfortableness and so on to the owner who desires a white color that is decoratively highly valuable due to representing a white color that gives an impression of cleanliness, and which simultaneously has an excellent mechanical properties and a decorative article formed from such a white ceramic.

### MEANS FOR SOLVING THE PROBLEMS

The white ceramic of the present invention comprises a zirconium oxide containing a stabilizer and a colorant which contains an aluminum oxide (Al₂O₃) as the main component . The white ceramic has a surface which has a lightness index L* not less than 83 nor more than 87, the chromaticness index a* not less than -1.5 nor more than 1.5 and the chromaticness index b* not less than -2.0 nor more than 3.0 in CIE1976 L*a*b* color space.

### EFFECT OF THE INVENTION

The white ceramic of the present invention comprises a zirconium oxide containing a stabilizer and a colorant which contains an aluminum oxide (Al₂O₃) as the main component wherein the content of the stabilizer is not less than 1% by mol and less than 3% by mol based on the zirconium oxide, wherein the stabilizer is a compound which contains yttrium (Y), and wherein the content of the aluminum oxide is 3.0% by mass or more based on 100% by mass of the zirconium oxide, and the white ceramic has a surface which has a lightness index L* not less than 83 nor more than 87, the chromaticness index a* not less than -1.5 nor more than 1.5 and the chromaticness index b* not less than -2.0 nor more than 3.0 in CIE1976 L*a*b* color space.

With this, even if the ceramic is worked into a decorative article with a thin wall thickness, its decorative values are not deteriorated since inner side can not be seen through the decorative article. Therefore, the white ceramic can represent a white color that gives an impression of cleanliness, thereby making it possible to provide a high grade feeling, feeling of aesthetic satisfaction and spiritual comfortableness to the owner through visual sense.

### BEST MODE FOR CARRYING OUT THE INVENTION

Hereinafter, several embodiments of the white ceramic of the present invention are explained.

It is important for the white ceramic of the present invention that it comprises a zirconium oxide containing a stabilizer and a colorant which contains an aluminum oxide (Al₂O₃) as the main component wherein the content of the stabilizer is not less than 1% by mol and less than 3% by mol based on the zirconium oxide, wherein the stabilizer is a compound which contains yttrium (Y), and wherein the content of the aluminum oxide is 3.0% by mass or more based on 100% by mass of the zirconium oxide, and has a surface which has a lightness index L* not less than 83 nor more than 87, the chromaticness index a* not less than -1.5 nor more than 1.5 and the chromaticness index b* not less than -2.0 nor more than 3.0 in CIE1976 L*a*b* color space.

According to the inventor's extensive researches, it has been found that a white ceramic, which ceramic can give a high grade feeling, a feeling of aesthetic satisfaction, spiritual comfortableness and so on to the owner who desires decoratively highly valuable article, can be obtained by adding an aluminum oxide (Al₂O₃) as the main component of the colorant to the zirconium oxide containing a stabilizer.

More specifically, the white ceramics of the present invention is manufactured by adding a stabilizer and a colorant that contains aluminum oxide (Al₂O₃), which represents a white color having relatively low transparency as the main component of the colorant, to the zirconium oxide which represents a white color having originally relatively high transparency, so that the surface of the article has a lightness index L* not less than 83 nor more than 87, the chromaticness index a* not less than -1.5 nor more than 1.5 and the chromaticness index b* not less than -2.0 nor more than 3.0 in CIE1976 L*a*b* color space. With this, even if the ceramic is worked into a decorative article with a thin wall thickness, its decorative values are not deteriorated since inner side can not be seen through the decorative article with a thin wall thickness, which makes it possible to provide a white ceramic that represents a white color with an impression of cleanliness to give a high grade feeling, a feeling of aesthetic satisfaction, spiritual comfortableness and so on to the owner through visual sense.

Here, the lightness index L* is an index which shows the contrast in color tone. When the value of the lightness index L* is large, the color tone is bright and when the value of the lightness index L* is small, the color tone is dark. According to the white ceramic of the present invention, the value of the lightness index L* is in the range of not less than 83 nor more than 87, which range provides a novel white color having an appropriate brightness, so that it provides an improved high grade feeling and an improved feeling of aesthetic satisfaction. On the other hand, in the case where the value of the lightness index L* is less than 83, the transparency of the ceramic increases. Then, in a decorative article, which is manufactured by the ceramic, the housing of the article becomes to be seen through, so that the brightness of the article becomes decreased and the color tone becomes dark, which makes it difficult to obtain the feeling of aesthetic satisfaction. In the case where the value of the lightness index L* is more than 87, the ceramic reflects light excessively, so that the color tone becomes too bright, which deteriorates the high grade feeling and is not preferable.

Then, the chromaticness index a* represents the chromaticity on the green-red chromatic coordinate. When the value of the chromaticness index a* is large in plus direction, the color tone turns to reddish, wherein the smaller absolute value makes the color tone less brilliant. And when the value of the chromaticness index a* is large in minus direction, the color tone turns to greenish. With regard to the white ceramic of the present invention, the value of the chromaticness index a* is in the range of not less than -1.5 nor more than 1.5. As a result, the ceramic can represent a white color in a color tone wherein the brilliance is turned down due to having the value of the chromaticness index a* within the above range. On the other hand, when the value of chromaticness index a* is less than -1.5, the color tone turns to greenish and when the value of chromaticness index a* is more than 1.5, the color tone turns to reddish, which results in a pinkish color. The both cases are not preferable, since each color can not be said to be white, which deteriorates the high grade feeling of the article.

Furthermore, the chromaticness index b* represents the chromaticity on the yellow-blue chromatic coordinate. When the value of the chromaticness index b* is large in plus direction, the color tone turns to yellowish, wherein the smaller absolute value makes the color tone less brilliant. And when the value of the chromaticness index b* is large in minus direction, the color tone turns to bluish. With regard to the white ceramic of the present invention, the value of the chromaticness index b* is in the range of not less than -2.0 nor more than 3.0. As a result, the ceramic can represent a white color in a color tone wherein the brilliance is turned down similar to the chromaticness index a*. On the other hand, when the value of chromaticness index b* is less than -2.0, the color tone turns to pale yellow by improving the yellow tone, and when the value of chromaticness index b* is larger than 3.0, the color tone turns to pale blue by improving the blue tone. The both cases are not preferable, since each color can not be said to be white, which deteriorates the high grade feeling of the article.

In addition, each of the value of the lightness index L* and the chromaticness indices a* and b* in CIE1976 L*a*b* color space of the surface thereof can be obtained by a measurement according to JIS Z 8722-2000. For example, the measurement can be performed by a color-difference meter CR-221 (manufactured by former Minolta Co., Ltd.) with using a standard light source of D65 under a light receiving condition a ((45-n) [45-0]) and the diameter of measurement at 3 mm. In the case where a sufficient diameter of measurement can not be available, the measurement can be performed under the above mentioned conditions after carrying out polishing work of the arbitrary portion.

Moreover, it is preferable that the white ceramic of the present invention has a light transmittance of not more than 20% in the visible light wavelength region when the ceramic has a wall thickness of 1.0 mm. In the case where the white ceramic of the present invention is used as a decorative article, it is possible to avoid that the inside of the mobile phone can be seen through the white ceramic which constructs the decorative article and that the color tone of the mobile phone darkens. Thus, when the white ceramic has a light transmittance of not more than 20% in the visible light wavelength region and it has a thickness of 1.0 mm, it is possible to avoid that the decorative values of the decorative article formed from the white ceramic is deteriorated. It means that 80% of the light that impinged on the surface is reflected. Thus, the white ceramic can provide a white color that gives an impression of cleanliness having an appropriate brightness, so that it can provide a high grade feeling, a feeling of aesthetic satisfaction, spiritual comfortableness and so on to the owner through visual sense. In the present invention, the thickness is set to 1.0 mm. However, it cannot be overemphasized that when the white ceramic of the present invention having a thickness of 1.0 mm has a light transmittance of not more than 20%, the white ceramic having a thickness of 1.0 mm or more can have a light transmittance of less than 20%.

In addition, it is preferable that the white ceramic of the present invention has a light transmittance of not more than 15% in the visible light having a wavelength of not less than 580 nm not more than 740 nm when it has a thickness of 1.0 mm. The visible light having the wavelength in the range of not less than 580 nm nor more than 740 nm provides several colors which can be recognized by the visual sense of a human being as the colors, for example yellow, orange of red depending on the wavelength. Thus, such visible light is widely applied to the colors of LED (light emitting diode), which is used as a back light to illuminate the numbers and/or letters marked on the various operation keys of the mobile phones having a whitish color. In the case where the white ceramic of the present invention is used for manufacturing the various operation keys and so on of the mobile phones, having a light transmittance of not more than 15% in the visible light in the above wavelength, such operation keys can avoid that the inside of the mobile phones is seen through and that the light of the colors such as yellow, orange or red used as the back light is transmitted therethrough. Therefore, the numbers and/or letters marked on the various operation keys can be brilliantly illuminated merely through the portions of the operation keys on which the numbers and/or letters are marked.

In this way, the white ceramic, which has a light transmittance of not more than 15% in the visible light having a wavelength of not less than 580 nm not more than 740 nm when it has a thickness of 1.0 mm, can be obtained by adding aluminum oxide which is the main component of the colorant in an amount of 3.0% by mass or more. The light transmittance can be measured with a specimen, which was processed to have a thickness of 1.0 mm, using a spectrophotometer CM-3700d (manufactured by Konica Minolta Co., Ltd.), a D65 standard light source and a mask (LAV) having a measurement diameter phi of 25.4mm and a illuminating diameter of 28mm in the visible light having a wavelength from 360 nm to 740 nm, at a viewing angle of 10 degree according to JIS Z 8722-2000.

The white ceramic of the present invention contains the stabilizer in an amount of not less than 1% by mol and less than 3% by mol based on the zirconium oxide. Although the reason is not apparent, it is possible to improve the mechanical properties of the present white ceramic as long as it has the above content of the stabilizer, compared with the conventional zirconium oxide, in which the improvement of the thermal properties thereof is focused and the stability of the crystal structure has been sought by adding the stabilizer in an amount of less than 3% by mol. As a result of having the mechanical properties, it is possible that the present ceramic shows a measurement value of not more than 1000 MPa in the three point bending test according to JIS R1601-1995. In addition, it is also possible to improve the fracture toughness of the ceramic to a value of 5 MPa m^{1/2} or more, which may affect the formation of chipping or cracking when the decorative article made of the ceramic is fallen and impacted.

Furthermore, the additive amount of the stabilizer influences in no small part on the color tone of the white ceramic. The zirconium oxide, to which the stabilizer was added in an amount of not less than 3% by mol, tends to show a decreased the value of the lightness index L* and a darkened color tone. When the additive amount of the stabilizer is less than 1% by mol, it is capable that the proportion of the monoclinic crystal in the zirconium oxide increases, so that the mechanical properties and the thermal properties of the white ceramic decrease.

The white ceramic of the present invention contains a stabilizer which is a compound containing yttrium (Y). In the present invention, it is capable to use compounds such as MgO, CaO and CeO₂ as the stabilizer. Use of a compound which contains yttrium (Y) as the stabilizer allows maintaining the crystal structure of the zirconium oxide in the cubic or tetragonal crystal phase which is stable at ordinary temperature and to improve the mechanical properties of the ceramic.

The compound containing yttrium (Y), which can improve the mechanical properties of the zirconia ceramic by stabilizing the crystal structure thereof, includes yttrium oxide (Y₂O₃), yttrium nitrate hexahydrate (Y(NO₃)₃ · 6H₂O), yttrium chloride hexahydrate (YCl₃ · 6H₂O), yttrium acetate trihydrate (Y(CH₃COO)₃ · 3H₂O) and so on.

In addition, it is preferable that the white ceramic of the present invention contains the colorant in the range of not less than 0.3% by mass nor more than 5.0% by mass. When the white ceramic contains the colorant in the above range, it is possible to retain the amount of reflected light which provides an appropriate brightness to the surface of the decorative article, so that the white ceramic of the present invention can provide a white color that gives an impression of cleanliness together with a high grade feeling, a feeling of aesthetic satisfaction, spiritual comfortableness and so on to the owner through visual sense. On the other hand, when the content of the colorant is less than 0.3% by mass, it is not preferable since the value of the lightness index L* of white ceramic may lower and the color tone thereof may become dark. In addition, when the content of the colorant exceeds 5.0% by mass, the value of the lightness index L* becomes so high that the color tone thereof becomes excessively reflect light. Thus, when the present ceramic is applied to the decorative article, such content of the colorant is not preferable since the high grade feeling of the article may be deteriorated.

In addition, it is preferable for the white ceramic of the present invention to contain iron (Fe) as an accessory component of the colorant. Iron (Fe) tends to react with aluminum oxide (Al₂O₃), which is the main component of the colorant, to form a compound. Although the reason is not apparent, it is presumable that the transparency can be decreased due to forming the compound. Therefore, even if the white ceramic of the present invention is applied to a decorative article and the wall thickness of the article is made thin, it is possible to avoid that the inside of the article is seen through and that the high grade feeling of the article is deteriorated by the color tone.

In addition, it is preferable for the white ceramic of the present invention to have an apparent density of not less than 5.9 g/cm³ nor more than 6.1 g/cm³. In the case where the value of the apparent density increases, open pores on the surface of white ceramic becomes to decrease, thereby the removal of the crystal grains from the edge face of the open pores can be controlled. On the other hand, when the value of the apparent density decreases, the mechanical properties of the ceramic decreases. In order to control the removal of the crystal grains without decreasing the mechanical properties, it is suitable to have an apparent density of not less than 5.9 g/cm³ nor more than 6.1 g/cm³. The value of the apparent density in the above range can be obtained by sintering the ceramic at a temperature of not less than 1350°C nor more than 1550°C. In addition, the apparent density may be measured according to JIS R 1634-1998.

It is preferable for the white ceramic of the present invention that the open pores on the surface thereof has a maximum diameter of not more than 10 µm (micrometers). In the case where the open pores exist on the surface of the white ceramic have a maximum diameter of not more than 10 µm, it is possible to improve the decorative values thereof such as a high grade feeling, a feeling of aesthetic satisfaction, spiritual comfortableness and so on with avoiding the matter that the shadow of the open pores is visually recognized as color unevenness. In the meanwhile, the maximum diameter of the open pores can be measured with using a metallographic microscope. Specifically, a photo of the surface of the white ceramic is first taken with a metallographic microscope at 100 times magnification. Then, the above photo is imaged with a CCD camera, the open pores existing in an area of 9*10⁻² mm² in the image is observed and the outer diameter of the largest pore is identified from the image. The above procedure, which is set as one cycle, is applied to the other observed portions and repeated for ten times (i.e. ten cycles) in total. The largest diameter of the pore obtained from the ten-time observation is set as the largest diameter of the open pores in the present invention.

Then, it is preferable for the white ceramic of the present invention that a proportion of area occupied by the open pores on the surface thereof is not more than 1%. In the case where the proportion of area occupied by the open pores on the surface of the white ceramic is not more than 1%, it is possible to provide a white ceramic having an appropriate brightness on the color tone of the surface, since the shadow of the open pores are not reflected over the entire surface, even if the open pores each having small diameter are finely dispersed over the surface of the ceramic. It is more preferable that the proportion of area occupied by the open pores on the surface thereof is not more than 0.8%.

In addition, the proportion of area occupied by the open pores on the surface of the white ceramic may be measured with using a metallographic microscope as with the maximum diameter of the open pores. Specifically, a photo of the surface of the white ceramic is first taken with a metallographic microscope at 100 times magnification. Then, the above photo is imaged with a CCD camera and the open pores existing in an area of 9*10⁻² mm² in the image is observed and total area of the open pores is calculated. The obtained total area of the open pores is divided by the total area (9*10⁻² mm²), thereby the proportion of area occupied by open pores on the observed portion is obtained. The above procedure, which is set as one cycle, is applied to the other observed portions and repeated for ten times (i.e. ten cycles) in total. According to each value of the proportion of area occupied by the open pores, an average value is calculated, thereby the proportion of area occupied by the open pores is obtained.

In addition, it is preferable for the white ceramic of the present invention that the aluminum oxide, which is the main component of the colorant, has an average crystal grain size of not less than 0.5 µm nor more than 2.0 µm. When the aluminum oxide has an average crystal grain size of not less than 0.5 µm nor more than 2.0 µm, the colorant can be evenly dispersed within the ceramic so that the coloring effect of the white color can be improved.

On the other hand, when the aluminum oxide has an average crystal grain size less than 0.5 µm, it becomes to be difficult to decrease the transparency of the white ceramic due to having too small crystal diameter. Thus, there is a possibility to fail to obtain the high grade feeling in the color tone of the white ceramic. When the aluminum oxide has an average crystal grain size more than 2.0 µm, it is preferable in that the white ceramic obtains the high grade feeling in the color tone by decreasing the transparency thereof. However, it is not preferable, since there is a possibility that a delicate difference in the color tone of the crystal of zirconium oxide from the crystal of aluminum oxide may be reflected in the surface of the obtained white ceramic.

Then, it is also preferable that the zirconium oxide, which is used as the principal component of the raw material, has an average crystal grain size larger than that of the aluminum oxide, which is used as the principal component of the colorant. Accordingly, when the raw materials are pulverized and mixed, it is possible to control the agglomeration of the zirconium oxide due to a disaggregation effect of the aluminum oxide having larger average crystal grain size.

It is also preferable that a proportion of the average crystal grain sizes of the crystal of zirconium oxide to the crystal of aluminum oxide (i.e. the average crystal grain size of zirconium oxide the average crystal grain size of aluminum oxide) is in the range of not less than 0.05 nor more than 0.5 in the white ceramic of the present invention. When the white ceramic has the proportion of the average crystal grain sizes of the crystal of zirconium oxide to the crystal of aluminum oxide in the range of not less than 0.05 nor more than 0.5, the agglomeration of the crystal grains may be suppressed when the raw materials are pulverized and mixed, occurrence of uneven distribution of the crystals of the zirconium oxide in the compact and the sintered body may be avoided. In addition, it is possible to control the difference in the color tones of the crystal of zirconium oxide from the crystal of aluminum oxide.

On the other hand, when the proportion of the average crystal grain size of the crystal of zirconium oxide to the average crystal grain sizes of aluminum oxide is less than 0.05, it is possible that uneven distribution of the crystals of the zirconium oxide is caused by the agglomeration of the crystal grains during pulverization and mixing of the raw materials. Thus, it becomes to be difficult to evenly disperse the aluminum oxide as the colorant, thereby decreasing the transparency of the zirconia ceramic becomes to be difficult. Accordingly, it is possible that the inside of the decorative article is seen through when the ceramic is used to form the decorative article having a thin wall thickness, so that the high grade feeling of the article may be deteriorated. In addition, when the proportion of the average crystal grain size of the crystal of zirconium oxide to the average crystal grain sizes of aluminum oxide is more than 0.5, it is possible to decrease the transparency of the white ceramic. However, it may increase the possibility that a boundary between the crystal of zirconium oxide and the crystal of aluminum oxide may be visually recognized, so that the difference of the both ceramics in the color tone may be reflected in the surface of the obtained white ceramic. Thus, it is not preferable.

The white ceramic of the present invention are suitably applied to the decorative article. There are case of a watch and links of a watchband as the decorative article for watches (or timepiece), to which the white ceramic of the present invention can be applied.

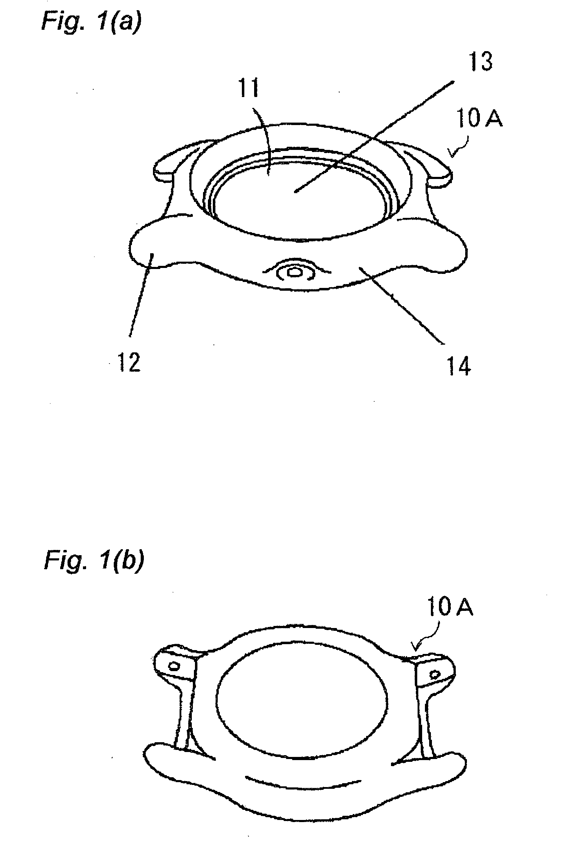

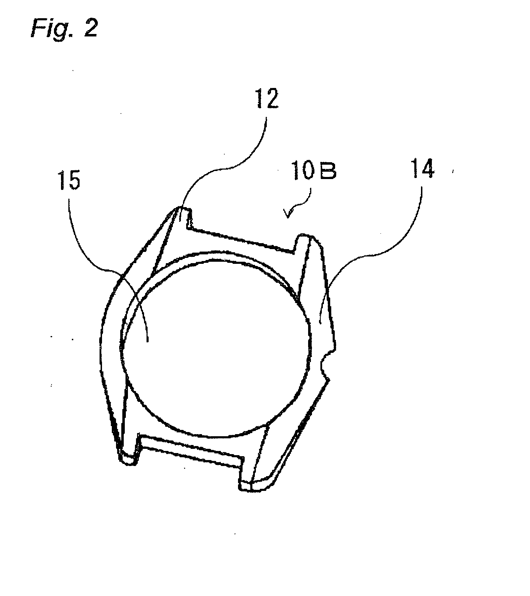

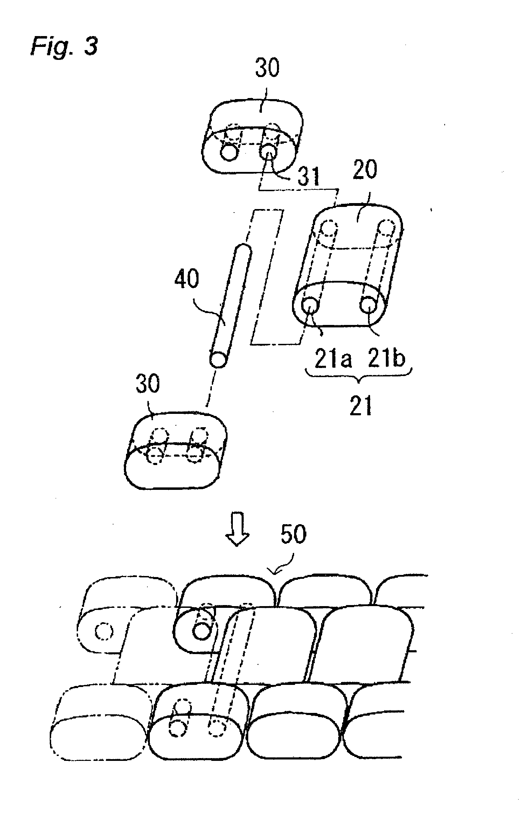

Fig. 1 shows an example of a watch case, to which the decorative article for watch of the present invention is applied, wherein Fig. 1(a) is a perspective view on the front surface of the watch case, and Fig. 1(b) is a perspective view on the back surface of the watch case. Fig. 2 is a perspective view showing another example of the watch case, to which the decorative article for watch of the present invention is applied. Fig. 3 is a schematic view showing an example of a construction of a watch band, to which the decorative article for watch of the present invention is applied. In the meanwhile, identical parts are given the same reference numerals in these drawings.

The watch case 10A shown in Fig. 1 comprises a recess 11 which accommodates a movement (drive mechanism) which is not shown, and lag 12 which engage a watchband (not shown) for wearing the watch on a wrist, in witch the recess 11 is composed of a thin bottom 13 and a thick case body 14. The watch case 10B shown in Fig. 2 has a recess 15 which accommodates a movement (drive mechanism) which is not shown, and lag 12 protruded from the case body 14, which engage a watchband (not shown) for wearing the watch on a wrist.

Each of the links that constitutes the watchband 50 shown in Fig. 3 comprises an inner link 20 and a pair of outer links 30, wherein the inner link 20 is arranged so as to be sandwiched between the outer links 30. The inner link 20 has a through hole 21, into which a pin 40 can be penetrated. Each of the outer links 30 has a pin hole 31, into which an end of the pin 40 can be inserted. An inner link 20 and the two outer links 30 are connected with each other by inserting each end of the pin 40, which penetrates the through hole 21 of the inner link 20, into each pin hole 31 of each outer link 30. The inner links 20 and the outer links 30 are sequentially interconnected with one another in the manner as explained above, thereby the watchband 50 is assembled.

Since the decorative article for watch of the present invention, which is used for the links that constitute the watch cases 10A, 10B and the links that constitute the watchband 50 is formed from the white ceramic of the present invention, it is possible to sufficiently provide a high grade feeling and a feeling of aesthetic satisfaction as a watch and spiritual comfortableness may be visually recognized.

It is preferable for the decorative article made from the white ceramic of the present invention that the surface thereof has a Vickers hardness (Hv) of not less than 8 GPa, since the value of Vickers hardness (Hv) of the surface is one of factors that affect the long-term reliability. When the decorative article has such a level of Vickers hardness (Hv), the surface of the decorative article is less likely to be mechanically damaged. Thus, it is possible to avoid that the surface of the decorative article is easily damaged, even if the decorative article is put into contact with a substance having a high hardness such as a glass or a metallic particle. The Vickers hardness (Hv) of the surface of the decorative article may be measured according to JIS R 1610-2003.

In addition, fracture toughness influences the antiwear quality of the surface of the decorative article and it is desirable for the fracture toughness to have a value thereof as high as possible. It is preferable for the white ceramic of the present invention to have a value of the fracture toughness of not less than 4 MPa·m^{1/2}. This fracture toughness can be measured based on the indentation fracture method (the IF method) specified by JIS R 1607-1995.

In the case where the decorative article, which is formed from the white ceramic, is used for wearable accessories, it is preferred to be lighter in weight. Therefore, it is suitable for the decorative article to have an apparent density of not more than 6 g/cm³ (except for 0 g/cm³). The apparent density can be measured according to JIS R 1634-1998.

The inner links 20, which are parts of the links of a watchband, are frequently subjected to tensile load. Thus, it is suitable for the white ceramic of the present invention to have a tensile strength of not less than 196 N. Such a tensile strength may be measured by the procedure as follows. After a pin (not shown) made of an cemented carbide, which is longer than the length of the through hole 21 of the inner link 20, is inserted into the through holes 21a, 21b, the pin is pulled in a direction to depart until the inner link 20 breaks down. The tensile strength may be read out by the load cell at when the inner link 20 breaks down.

In the case where the white ceramic of the present invention is used to manufacture a watch case or links of a watchband, it is preferable for the white ceramic to include a ferromagnetic metal such as cobalt (Co) having a mass susceptibility of not less than 162 G cm³/g in total at an amount of not more than 0.1% by mass, considering the possible adverse effect on the movement (drive mechanism) which is not shown. The content of such ferromagnetic metal can be measured by ICP (Inductivity Coupled Plasma) emission spectrometry.

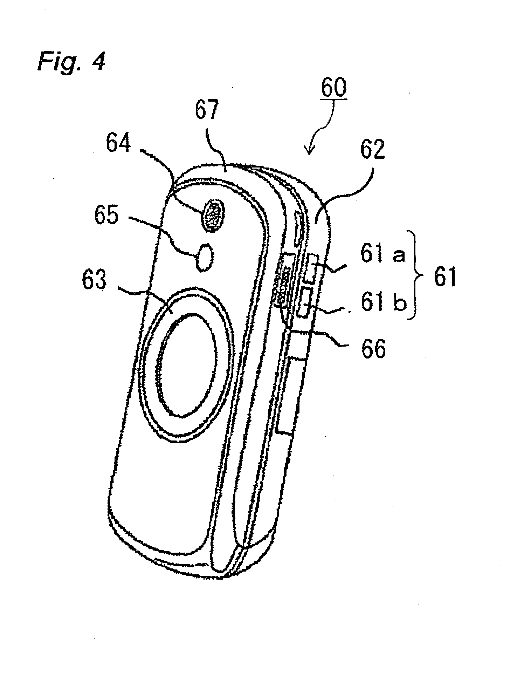

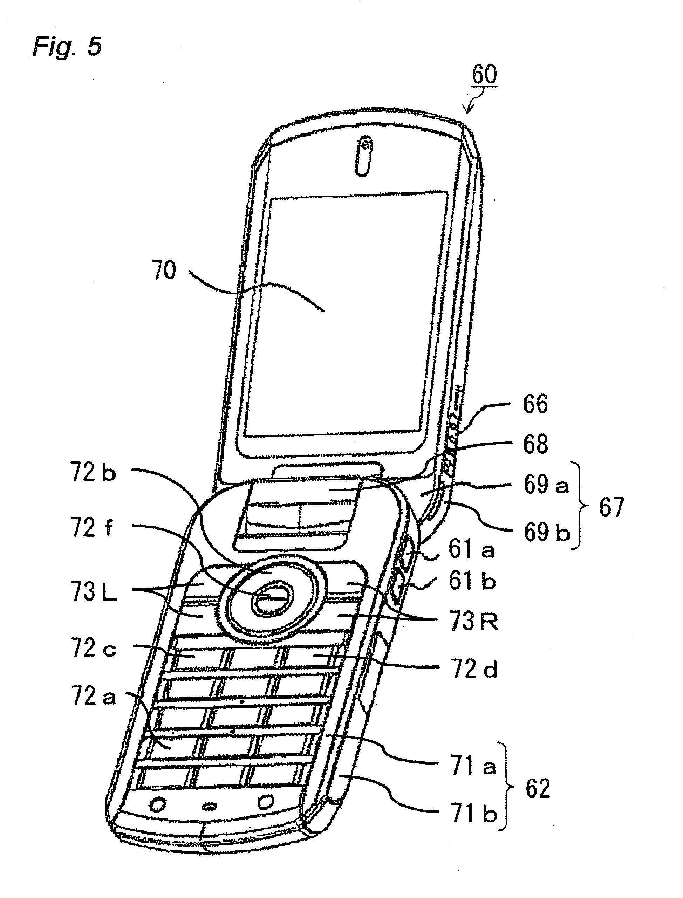

Next, Fig. 4 is a perspective view showing an example of a mobile phone, to which the decorative article for handheld device of the present invention is applied. Fig. 5 is a perspective view showing a state where the housing of the mobile phone as shown in Fig. 4 is opened.

It is suitable for the decorative article for the handheld device of the present invention to be formed from the white ceramic of the present invention. Specific examples thereof are, for example, the various operation keys, cases and so on as shown in Figs. 4 and 5.

The mobile phone 60 as shown in Fig. 4 comprises a first housing 62 comprising mode keys 61, which comprises a mode change key 61a which changes into a radio mode for listening to a radio program or a music mode for listening to a music, and a manner key 61b which changes the mobile phone 60 into a manner mode; and a second housing 67 comprising a touch sensor 63 for sensing a touch of an object such as a finger, thereby generating an input signal, a camera 64 for taking a picture of an object, a light source 65, and a slide switch 66 for selecting the active state or the inactive state of the touch sensor 63.

The mobile phone shown in the example of Fig. 5 is in a state that the second housing 67 is opened, wherein the second housing 67 is connected with the first housing 62 via a hinge 68, thereby the second housing 67 can be freely opened and closed. The second housing 67 comprises a front case 69a and a rear case 69b, and the front case 69a is equipped with a liquid crystal display unit 70.

The first housing 62 also comprises a front case 71a and a rear case 71b, and the front case 71a is equipped with various operation keys. The operation keys comprise a numeric keypad 72a for entering various numbers such as telephone numbers, a cursor control key 72b for controlling the movement of the cursor relating to several function menus, a call start key 72c for receiving an incoming call by being pressed down, power/call release key 72d for turning on and off the power/terminating a communication by being pressed down, and function keys 73L, 73R, each of which is arranged at left/right side of a center key 72f, which is positioned at the center of the cursor control key 72b.

When at least one member selected from the above cases comprising the front cases 69a, 71a and rear cases 69b, 71b, as well as the operation keys comprising the numeric keypad 72a, the cursor control key 72b, the call start key 72c, the power/call release key 72d, the center key 72f and the function keys 73L, 73R is formed from the white ceramic of the present invention, it is possible to give a high grade feeling, a feeling of aesthetic satisfaction, spiritual comfortableness and so on to the owner for a prolonged period, so that the owner can feel a sense of satisfaction in that he owns the mobile phone 60 which shows such a color tone. In addition, the white ceramic of the present invention has good compatibility with the other color tones, so that it can be combined with members having various color tones. Thus, the white ceramic of the present invention can satisfy the diversified demands of the consumers.

Hereinbefore, the present invention has been explained with reference to the mobile phone 60 as an embodiment of handheld device. However, the handheld device to which the decorative article for the handheld device of the present invention is applicable is not limited to the mobile phone 60 but may be applicable to the other various handheld devices including a personal digital assistance (PDA), a portable type car navigation device and a portable type audio player as long as a part thereof is required to have a decorative appearance.

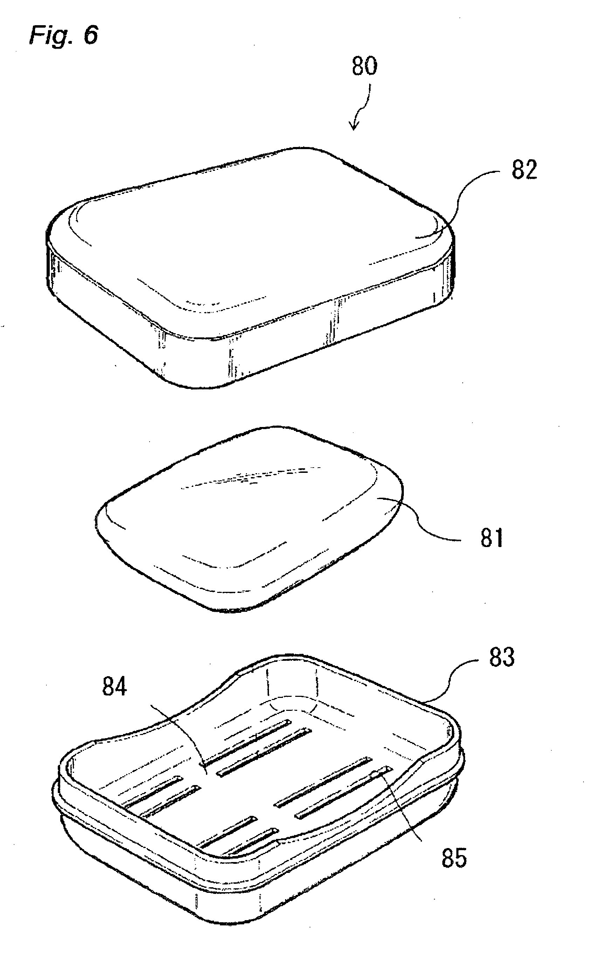

Then, Fig. 6 is a schematic view showing an example of a soap case as an embodiment, which is a decorative article for livingwares of the present invention.

The soap case 80 shown in Fig. 6 comprises a main body 83 and a lid 82. The main body 83 has a soap supporting surface 84 for supporting a soap 81 and waste channel 85 for draining water attached to the surface of the soap 81. When the soap 81 is not used, the soap 81 is laid on the soap supporting surface 84 of the main body 83 and the lid 82 is fitted onto the main body 83, thereby the soap 81 is housed within the soap case 80. When the soap 81 is to be used, the lid 82 is removed from the main body 83, thereafter the soap 81 can be used. After used, the used soap 81 is placed on the soap supporting surface 84 of the main body 83, thereby the water which attached to the surface of the soap 81 can be drained, so that dissolution of the soap 81 can be avoided.

When either one or both of the lid 82 and the main body 83 of this soap case 80 is formed from the white ceramic of the present invention, many consumers will feel a sense of satisfaction in that they own the soap case 80 and a high grade feeling, a feeling of aesthetic satisfaction, spiritual comfortableness and so on will be given to the consumers through a visual sense when they use it.

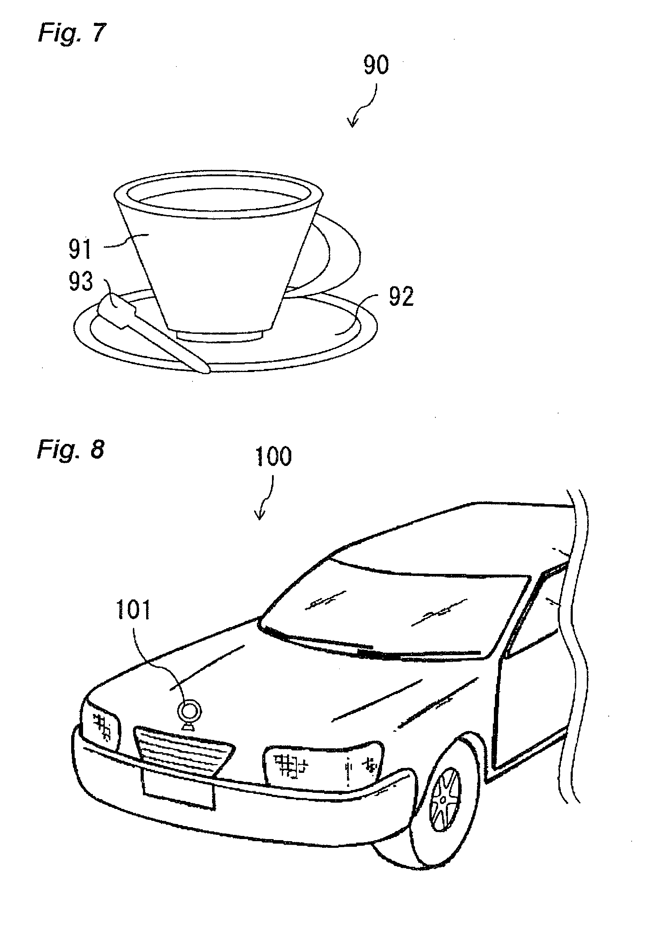

Then, Fig. 7 is a perspective view showing an example of a coffee cup set, which is a decorative article for livingwares of the present invention.

The coffee cup set 90 shown in Fig. 7 comprises a coffee cup 91, a saucer 92 and a spoon 93. When the coffee cup 91, the saucer 92 and the spoon 93 are formed from the white ceramic of the present invention, a sense of satisfaction will be given to many consumers by owning the coffee cup set and a high grade feeling, a feeling of aesthetic satisfaction, spiritual comfortableness and so on will be given to them through a visual sense when in use.

In addition, the white ceramic of the present invention has good compatibility with the other color tones, so that it is possible to form the coffee cup set by combining at least one member of the set comprising the coffee cup 91, the saucer 92 and the spoon 93 is formed from the white ceramic of the present invention with the other member being formed to have the other color tone.

In addition, the decorative article for livingwares of the present invention can be used conveniently not only for the soap case 80 and the coffee cup set 90, but also for the other decorative articles for livingwares such as a toothbrush, a handle of a razor, an ear pick and scissors. In particular, a user will feel a high grade feeling, a feeling of aesthetic satisfaction, spiritual comfortableness and so on, wherein extraordinary experiences are impressively created, by using the decorative article for livingwares of the present invention representing the white color, which is applied to amenity goods, onto which various logos are marked, at a bathroom or a lavatory in a first class hotel.

Next, Fig. 8 is a perspective view showing an example of a body of a vehicle, to which the decorative article for vehicles of the present invention is attached.

To the body of the vehicle 100 shown in Fig. 8, an emblem 101 which is one of the decorative articles for vehicles is attached. Since this emblem 101 is formed from the white ceramic of the present invention, the owner can feel a high grade feeling, a feeling of aesthetic satisfaction, spiritual comfortableness and so on through the visual sense. Thus, the decorative values of the body of the vehicle 100 can be improved. In the meanwhile, although the emblem 101 is shown in Fig. 8 as an example which is attached to the front portion of the body of the vehicle 100, the emblem 101 can be attached to the rear portion of the body of the vehicle 100, wherein the emblem shows the manufacturer's name or the name of the type of vehicle and is formed from the decorative article for vehicles of the present invention, which is made of the white ceramic of the present invention.

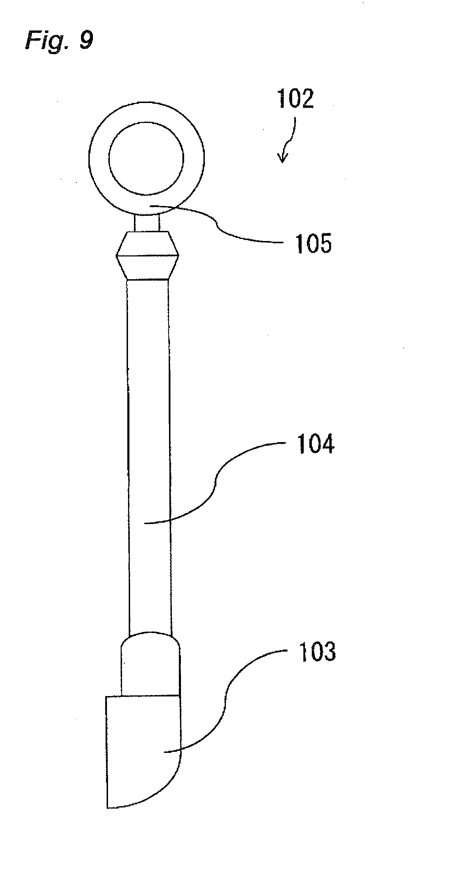

Then, Fig. 9 is a front view showing an example of a corner pole of a vehicle, which is formed from the decorative article for vehicles of the present invention.

The corner pole 102 shown in Fig. 9 is attached to a body of a vehicle in order that a driver of the vehicle uses it as a marker of the left front end of the vehicle (in the case of a right-hand drive vehicle) which is difficult to see for the driver when he drives the vehicle in a parking area. The corner pole 102 comprises a base of attachment 103, pole portion 104 and illuminating portion 105 having LEDs. In the case where the pole portion 104 of this corner pole 102 is formed from the white ceramic of the present invention as a decorative article for vehicles of the present invention, or an emblem formed from the white ceramic of the present invention is attached instead of the illuminating portion 105, it is preferable since the decorative values not only of the corner pole 102 but also of the body of the vehicle can be improved.

In addition, it is suitable to apply the decorative article for vehicles of the present invention not only to the emblem 101 or corner pole 102, but also to, for example, a part of a wheel cap, a part of a hood ornament which is fixed on a bonnet of a body, goods and accessories attached to the interior of body and a part thereof.

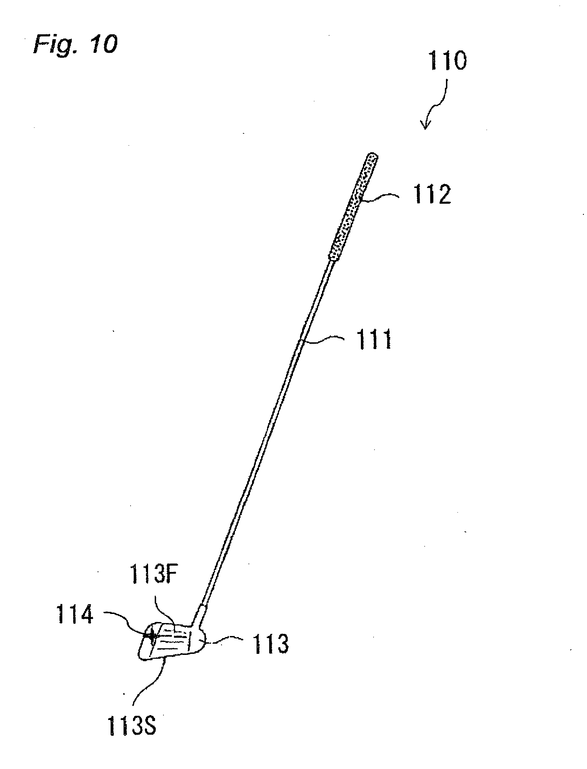

Then, Fig. 10 is a front view showing an example of a golf club, to which the decorative article for sporting goods of the present invention is applied.

The golf club 110 shown in Fig. 10 comprises a shaft 111, a grip 112 at one end of the shaft 111 and a head 113 at another end of the shaft 111. This head 113 has a front face 113F which hits a golf ball and a sole face 113S which contacts with the ground. When an accessory 114 which is embedded in the front face 113F is formed from the white ceramic of the present invention, the decorative values of the golf club can be improved.

In addition, it is suitable that the accessory 114, which is the decorative article for sporting goods formed from the white ceramic of the present invention, is embedded in the sole face 113S or the grip 112.

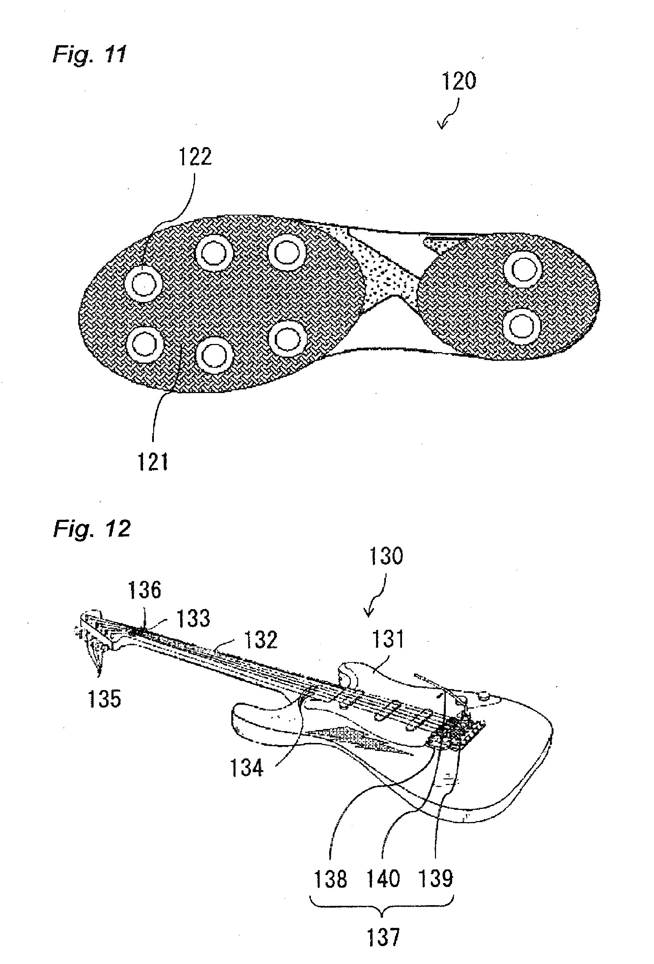

Fig. 11 is a bottom view showing an example of spiked shoes, to which the decorative article for sporting goods of the present invention is applied.

The spiked shoes 120 shown in Fig. 11 are used, for example, for rugby or soccer. The spiked shoes have a plurality of studs 122 on its shoe sole 121, which are formed to have projecting forms, thereby a pivoting foot can be stabilized when the wearer intends to kick a ball. In the case where the studs 122 as the decorative article for sporting goods of the present invention are formed from the white ceramic of the present invention, the decorative values of the spiked shoes would be improved. In addition, the obtained studs 122 have an excellent antiwear quality rather than the studs formed from aluminum alloys which were conventionally used, thus the cost of replacing the studs 122 can be reduced. Further, it is possible to coat the surface of the studs 122 with any transparent resin in order to prevent the studs 122 from chipping off, which may cause during the game.

Next, Fig. 12 is a perspective view showing an example of a guitar, to which the decorative article for musical instruments of the present invention is applied.

The guitar 130 shown in Fig. 12 comprises a main body 131 and a neck which extends outwardly from the main body 131. A nut 133 is arranged at the end of the neck 132 and tuning pegs 135 are located at the distal end of the neck beyond the nut 133 so as to adjust the tension of each corresponding strings 134, respectively. A clamping mechanism 136, which holds the strings 134 against the nut 133 so as not to shift its position, is located near the nut 133.

On the other hand, a tremolo unit 137 is attached to the main body 131, which unit simultaneously enhances or diminishes the tension of the string 134, thereby generating an impressive sound effect. The tremolo unit 137 comprises a base plate 138 attached to the main body 131, bridge saddles 139 which are held by the base plate 138 and tunably support the strings 134, and a tremolo bar 140 which actuates the tremolo unit 137. In the case where at least one of the base plate 138, bridge saddles 139 and a tremolo bar 140 of the guitar 130 is formed from the white ceramic as the decorative article for musical instruments of the present invention, the owner can feel a sense of satisfaction by possessing the guitar 130 since the decorative values of the guitar 130 has been improved and simultaneously many audience would be charmed by the guitar 130.

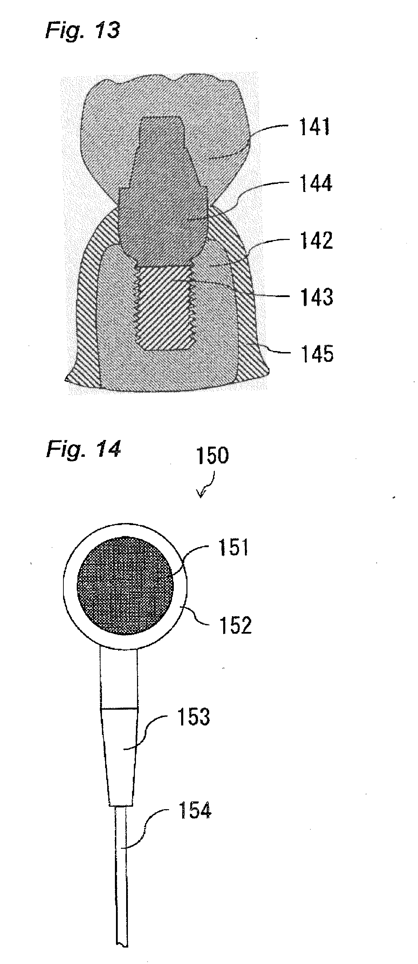

Fig. 13 is a schematic view showing an example of an artificial crown, to which the decorative article for accessories of the present invention is applied.

The schematic view of Fig. 13 shows an artificial crown 141 mounted on an abutment 144, which is settled on an artificial tooth root (implant) 143, wherein the implant 143 is embedded in a jawbone 142 within a gum 145. In the case where the artificial crown 141 is formed from the white ceramic as the decorative article for accessories of the present invention, the owner can possesses a beautiful white tooth, which provides healthy and fresh impression to the other people, so that he will be able to be highly satisfied therewith.

It is possible that the artificial implant 143 has a portion of screw form, which is intended to be embedded in the jawbone 142 and, on the portion of screw form, a hard type junctional membrane formed from a biodegradable material is formed. In such case, the biodegradable material includes at least one selected from chitin, collagen and the derivative therefrom, each of which has a high potential to induce formation of new bone. Moreover, a soft type junctional membrane, which is formed from the cross-bridged above-mentioned biodegradable material, may be formed over a base portion of the abutment 144 so that it may abut the gingiva 145 which is positioned above the jaw bone 142.

Since the decorative article for accessories of the present invention formed from the white ceramic of the present invention is made of zirconia ceramic, it has good biocompatibility, so that the white ceramic is suitable not only for an artificial crown 141, but also for an artificial tooth root 143 or an abutment 144.

Fig. 14 is a front view showing an example of an earphone unit, to which the decorative article for accessories of the present invention is applied.

The earphone unit 150 shown in Fig. 14 comprises a speaker 151 which is inserted in a concha of the listener's ear and which generates an acoustic wave; a case 152 which contains the speaker 151; and an electric code 154 which supplies electric signal to the speaker 151 through a code extending portion 153 which abuts the case 152.

In the case where the case 152 of the earphone unit 150 is formed from the white ceramic of the present invention as the decorative article for accessories of the present invention, the decorative values of the earphone unit 150 can be increased. Thus, a decorative article for accessories, which will give a high grade feeling, a feeling of aesthetic satisfaction, spiritual comfortableness and so on to many of the owners through the visual sense.

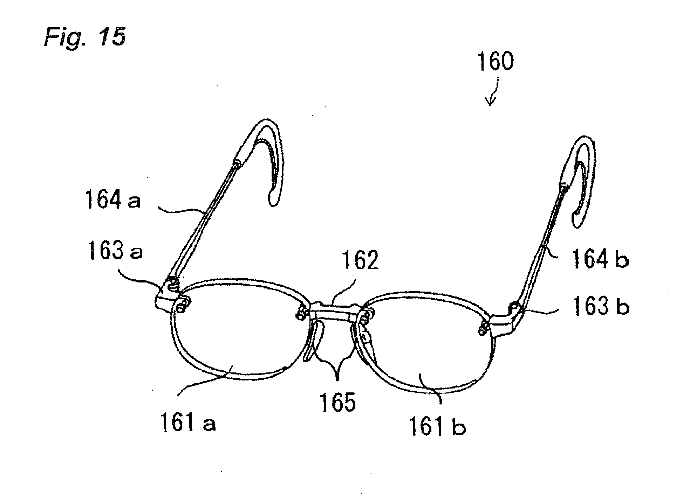

Furthermore, Fig. 15 is a perspective view showing an example of glasses, to which the decorative article for accessories of the present invention is applied.

The glasses 160 shown in Fig. 15 comprises a pair of lenses 161a and 161b for correcting vision or protecting eyes from ultraviolet rays; a bridge 162 which connects the lenses 161a and 161b; a pair of (rim-to-temple) joint pieces 163a, 163b each of which is connected to each of the lenses 161a and 161b; a pair of temples 164a, 164b each of which is connected via hinge to each of the joint pieces 163a, 163b so that it can pivot around the hinge; and a pair of nose pads 165 each of which is mounted on each of the lenses 161a and 161b via a nose pad connecting member, respectively.

In the case where at least one of the bridge 162, the temples 164a, 164b and the nose pads 165 of these glasses 160 is formed from the white ceramic of the present invention as the decorative article for accessories of the present invention, the decorative values of the glasses 152 can be increased. Thus, a decorative article for accessories, which gives a high grade feeling, a feeling of aesthetic satisfaction, spiritual comfortableness and so on to many of the owners through the visual sense will be provided.

Then, an example of a method of producing the white ceramic of the present invention will be explained.

The method of producing the white ceramic of the present invention comprises, providing zirconium oxide, which was prepared by a coprecipitation process together with yttrium oxide as a stabilizer in the range of not less than 1% by mol and less than 3% by mol, adding aluminum oxide in the range of not less than 0.3% by mass nor more than 5.0% by mass as the colorant to 100% by mass of the above zirconium oxide, and mixing them together to obtain a raw material. Then, water as a solvent is added to the mixed raw material and the mixture is subjected to mixing and grinding procedure by a vibration mill or a ball mill.

It is preferable that the zirconium oxide used as a raw material has an average particle diameter in the range of not less than 0.05 µm nor more than 0.5 µm and the aluminum oxide has an average particle diameter in the range of not less than 0.5 µm nor more than 2.0 µm. Thus, by setting the average particle diameter of aluminum oxide as the main component of the colorant larger than the average particle diameter of zirconium oxide as the main component, it is possible to avoid the formation of agglomeration of zirconium oxide by a disintegrating action of aluminum oxide which has a larger average particle diameter during the mixing and grinding process. It is possible that the white ceramic molded and sintered using the above raw material has good dispersibility of the aluminum oxide as the colorant, shows good color tone and provides a sintered body having an increased density.

It is important to use ceramic balls having a white based color made of zirconia, alumina, or zirconia and alumina as the balls to be used for the mixing and grinding process. As the ceramic ball having a white based color, it is preferable to use, for example, a composition containing 91 to 99% by mol of zirconium oxide (ZrO₂) having a purity of not less than 99.5% together with 1 to 9% by mol of at least one selected from the group consisting of yttrium oxide (Y₂O₃), hafnium oxide (HfO₂), cerium oxide (CeO₂), magnesium oxide (MgO) and calcium oxide (CaO) as a stabilizer; or a composition containing the above composition, to which 1 to 40% by mass of aluminum oxide (Al₂O₃) having a purity of not less than 99.5% is further added; or a composition merely containing aluminum oxide (Al₂O₃) having a purity of not less than 99.5%.

The ceramic balls having the white based color, which are to be used for the mixing and grinding process and the average particle diameter of the raw powder are important factors to attain the surface of the white ceramic of the present invention comprising the lightness index L* in the range not less than 83 nor more than 87 and the chromaticness index a* not less than -1.5 nor more than 1.5 and the chromaticness index b* not less than -2.0 nor more than 3.0, in CIE1976 L*a*b* color space.

Then, each kinds of binders is added to the mixed and ground raw material at a predetermined amount and the mixed material is dried by a spray drying process to obtain granular particles. The granular particles are formed in a desired shape such as disk, plate, ring and so on by being subjected to a desired molding process, for example, dry pressure molding process, cold hydrostatic pressure molding process, extrusion molding process, injection molding process or the like, thereby obtaining a green compact. Then, after degreased depending on the necessity, the green compact thus obtained is subjected to a sintering process at a temperature of not less than 1350°C nor more than 1550°C under atmospheric under the atmospheric air condition to obtain a sintered body.

In addition, the apparent density of the white ceramic of the present invention is affected by the influence of the sintering temperature and when the sintering temperature is elevated, the apparent density increases. In order to obtain the apparent density of the white ceramic in the range of not less than 5.9 g/cm³ nor more than 6.1 g/cm³, it is suitable to set the sintering temperature of not less than 1350°C nor more than 1550°C. By setting the sintering temperature of not less than 1350°C nor more than 1550°C, it is possible to obtain a ceramic, which has been sufficiently sintered, which has the apparent density in the range of not less than 5.9 g/cm³ nor more than 6.1 g/cm³, and which has an excellent mechanical properties. In addition, the removal of the crystal grains from the edge face of the open pores can be controlled, thereby the number of the open pores on the surface of white ceramic can be decreases.

Then, the surface of the sintered body thus obtained is subjected to barrel polishing process, thereby the white ceramic of the present invention which has a decorative surface representing beautiful white color can be obtained. In the case where the product made of the white ceramic has a complicated shape, the material may be preliminarily formed in a block shape or other shape similar to the shape of the product by the dry pressure molding process, cold hydrostatic pressure molding process, extrusion molding process, injection molding process or the like, followed by the resultant green compact being sintered, ground into the product shape and finished by lapping and barrel polishing. Alternatively, the material may be formed from the beginning into the product shape by injection molding process, with the resultant green compact being sintered and subjected to lapping and barrel polishing.

In addition, before performing barrel polishing, grinding process or lapping process may be performed depending on the necessity. For example, lapping process may be performed by supplying a diamond paste having an average particle diameter not more than 1 µm to a lapping machine formed from tin. Moreover, the barrel polishing may be performed in a wet condition using a centrifugal barrel polishing machine by supplying media and green carborundum (GC) to the centrifugal barrel polishing machine, and polishing may be continued for around 24 hours.

In the case where the dry pressure molding process is selected as the molding process, its molding pressure exerts influence on the proportion of area occupied by the open pores, the maximum diameter of the open pores and Vickers hardness (Hv) on the decorative surface. When the molding pressure is elevated, both the proportion of area occupied by the open pores and the maximum diameter of the open pores can be decreased and the Vickers hardness (Hv) can be increased. It is suitable to set the molding pressure in the range of not less than 49 MPa nor more than 196 MPa in order to obtain the white ceramic of the present invention. The reason why the molding pressure is set to not less than 49 MPa is that the proportion of area occupied by the open pores on the surface of the white ceramic could exceed 1 % or the Vickers hardness (Hv) could be less than 8 GPa when the molding pressure is set to less than 49 MPa. The reason why the molding pressure is set to not more than 196 MPa is that the service life of the molding die becomes shorter when the molding pressure is set to more than 196 MPa. By setting the molding pressure in the range of not less than 49 MPa nor more than 196 MPa, it is made possible to elongate the service life of the molding die, and the proportion of area occupied by the open pores on the surface of the white ceramic can be decreased to not more than 1 % and the Vickers hardness (Hv) can be increased to not less than 8 GPa. In particular, it is more preferable that the molding pressure is set to not less than 96 MPa, since the maximum diameter of the open pores can be decreased to not more than 10 µm.

The White ceramic of the present invention obtained as explained above gives an impression of cleanliness and represents the white color which is highly regarded as a beautiful color, so that it also provides a high grade feeling and a feeling of aesthetic satisfaction. As a result, the white ceramic of the present invention can give spiritual comfortableness to the owner through visual sense. Accordingly, it is possible to suitably apply the white ceramic of the present invention to each of the decorative article for watches such as watch case and links of watchband; to the decorative article for mobile phone such as various operation keys or the casing of the mobile phone; to the decorative article for various livingwares such as soap case, the coffee cup set, handles of a knife, a fork, a toothbrush, a razor, an earpick and scissors, material for stamps, business cards; to the decorative article for vehicles such as the emblem or corner pole showing the manufacturer's name or the name of the type of vehicle; to the decorative article for sporting goods such as studs of spiked shoes or accessories of golf club; to the decorative article for musical instruments such as a base plate of a guitar; and to the decorative article for accessories such as an artificial tooth crown, a case of earphone unit, a bridge of glasses.

In addition, the white ceramic of the present invention can be suitably applied to the decorative articles for accessories, such as a brooch, a necklace, ear rings, a ring, a bracelet, an anklet, a tie pin, a tie tack, a medal, and a button, the decorative articles for architectural members such as tiles for floor, wall or ceiling and door knob, and the decorative articles for home electrical appliances. In addition, the white ceramic of the present invention can be suitably applied to a watch type mobile phone wherein the watch and the mobile phone are combined thereby possessing the both functions thereof as long as a part thereof is required to have a decorative appearance.

### Example 1:

Hereinafter, examples of the present invention will be specifically explained.

Each of white ceramic of the present invention and conventional white ceramic was produced. Then, an examination which compares the values of lightness L*, chromaticness indices a* and b* in the CIE1976 L*a*b* color space of the surface of each sample of the ceramics depending on the presence or the absence of aluminum oxide as the colorant was performed.

First, with regard to the white ceramic of the present invention, zirconium oxide having an average particle diameter of 0.1 µm was provided, which was prepared by a coprecipitation process, wherein 2% by mol of yttrium oxide as the stabilizer had been added. Then, aluminum oxide having a purity of not less than 99% and having an average particle diameter of 1 µm was added in an amount of 3 parts by mass to 100 parts by mass of the above zirconium oxide and a predetermined amount of water was added as a solvent to the mixed raw material to form a slurry. Then, the above slurry was introduced into a ball mill which contains zirconia balls having a purity of not less than 99.5%. After being mixed and ground, a predetermined amount of paraffin wax as a binder was further added to the slurry and then the slurry was spray dried by a spray dryer to form granular particles. And then, the granular particles were subjected to dry pressure molding process using a pressure molding press apparatus to form disk-like compact. The compact was then sintered at a maximum temperature of 1450°C, thereby the white ceramic of the present invention having disk form having a diameter of 30 mm and a thickness of 5 mm was obtained.

Next, with regard to the conventional white ceramic, two kinds of zirconium oxides, one having an additive amount of 2% by mol and another having an additive amount of 3% by mol of yttrium oxide as the stabilizer, were provided as a raw material. Each raw material is subjected to the same production method as the white ceramic of the present invention except for addition of aluminum oxide. In the meanwhile, the case where yttrium oxide powder was added in an amount of 2% by mol was attributed to as Comparative Example 1 and the case where yttrium oxide powder was added in an amount of 3% by mol was attributed to as Comparative Example 2.

Using the obtained white ceramic of the present invention and each of the two kinds of the conventional white ceramics as Comparative Examples, each value of the lightness index L* and the chromaticness indices a* and b* in CIE1976 L*a*b* color space on each surface was measured according to JIS Z 8722-2000. The measurement was performed by a color-difference meter CR-221 (manufactured by former Minolta Co., Ltd.) with using a standard light source of D65 under a light receiving condition a ((45-n) [45-0]) and the diameter of measurement at 3 mm.
The results are shown in Table 1.

**[Table 1]**

| | Lightness index L* | Chromaticness indices | |
|---|---|---|---|
| | | a* | b* |
| Example | 85.0 | 0.1 | 0.7 |
| Comparative Example 1 | 78.4 | -0.1 | -1.3 |
| Comparative Example 2 | 76.2 | -0.5 | -0.5 |

As shown in Table 1, each value of the lightness index L* in Comparative Examples 1 and 2 was low, in which additive was added in an amount of 2% by mol or 3% by mol but aluminum oxide was not added. Moreover, each ceramic of Comparative Examples 1 and 2 reflected less light, so that each one showed higher transparency than the white ceramic of the present invention.

To the contrary, the Example of the white ceramic of the present invention showed the value of lightness index L* in the range of not less than 83 nor more than 87, thereby reflected much light and lowered the transparency than Comparative Examples 1 and 2 and the values of chromaticness indices a* and b* are within the ranges of the present invention which are not less than -1.5 nor more than 1.5 and not less than -2.0 nor more than 3.0, respectively. Therefore, the present invention was able to provide a white ceramic which can give a high grade feeling, an impression of cleanliness, a feeling of aesthetic satisfaction, spiritual comfortableness and so on through the visual sense.

### Example 2

Next, several samples of the white ceramic of the present invention were prepared, wherein each additive amount of yttrium oxide as the stabilizer and aluminum oxide as the colorant was differed from each other. Then, each value of the lightness index L* and the chromaticness indices a* and b* in CIE1976 L*a*b* color space on each surface was measured and three point bending test (JIS R 1601) was performed. In addition, an investigation, which asked whether or not the monitor felt a high grade feeling from the obtained color tone, was performed on the monitors which include foreigners.

First, several samples of zirconium oxide having average particle diameter of 0.1 µm and having various amounts of yttrium oxide in the range from 0.9 to 3.0% by mol as shown in Table 2 were prepared by a coprecipitation process, and aluminum oxide having average particle diameter of 1 µm and having a purity of not less than 99% was provided.

Next, in each example, each amount of aluminum oxide as shown in Table 2 was added to 100% by mass of zirconium oxide and mixed each other. Thereafter, the procedure similar to that of Example 1 was performed, thereby each sample of Sample Nos. 1 to 16 was obtained, which was the white ceramic of the present invention having a disk form having an outer diameter of 30 mm and a thickness of 5 mm, respectively.

Then, each value of the lightness index L* and the chromaticness indices a* and b* in CIE1976 L*a*b* color space on each surface of Samples Nos. 1 to 16 was measured according to JIS Z 8722-2000. In these procedures, the used apparatus and the used measurement conditions were the same as those of Example 1.

Separately, each sample was prepared from each of Samples Nos. 1 to 16, which had a form suitable to JIS R1601-1995, and subjected to the three point bending test according to JIS R1601-1995.

With regard to the color tone, it was evaluated by 80 monitors comprising 10 male and 10 female monitors in each of 4 age brackets from 20s to 50s, by responding to questionnaire asking how they felt about high-grade impression. Based on these results, the proportion of the monitors who replied to feel the high-grade impression among the monitors is shown in column "monitors evaluation" in Table 2, wherein the value being not less than 80% was rated as good.
The results are shown in Table 2.

**[Table 2]**

| Sample No. | added amount of Y₂O₃ (% by mol) | added amount of Al₂O₃ (% by mass) | Lightness index L* | Chromaticness indices | | Three point bending strength (MPa) | Monitors evaluation (%) |
|---|---|---|---|---|---|---|---|
| | | | | a* | b* | | |
| 1 * | 0.9 | 1.0 | 87.0 | 0.8 | -2.0 | 820 | 80.0 |
| 2 * | 1.0 | 1.0 | 86.5 | 0.6 | -1.9 | 1030 | 85.0 |
| 3 * | 1.5 | 1.0 | 85.8 | 0.3 | -1.3 | 1106 | 86.3 |
| 4 * | 2.0 | 1.0 | 84.7 | -0.1 | -0.8 | 1303 | 88.8 |
| 5 * | 2.5 | 1.0 | 84.2 | -0.3 | 1.8 | 1086 | 87.5 |
| 6 * | 2.9 | 1.0 | 83.4 | -0.5 | 3.0 | 1020 | 86.3 |
| 7 * | 3.0 | 1.0 | 83.0 | -0.7 | 3.0 | 850 | 81.3 |
| 8 * | 2.0 | 0.2 | 83.2 | -1.5 | -1.1 | 1002 | 82.5 |
| 9 * | 2.0 | 0.3 | 83.8 | -1.4 | -0.9 | 1240 | 86.3 |
| 10 * | 2.0 | 0.5 | 84.3 | -0.8 | -0.8 | 1305 | 87.5 |
| 11 * | 2.0 | 1.0 | 84.8 | -0.1 | -0.7 | 1280 | 90.0 |
| 12 * | 2.0 | 2.0 | 85.1 | 0.1 | -0.6 | 1265 | 93.8 |
| 13 | 2.0 | 3.0 | 85.6 | 0.3 | -0.5 | 1240 | 98.8 |
| 14 | 2.0 | 4.0 | 86.1 | 0.8 | -0.1 | 1230 | 96.3 |
| 15 | 2.0 | 5.0 | 86.6 | 1.4 | 0.2 | 1190 | 87.5 |
| 16 | 2.0 | 5.1 | 87.0 | 1.5 | 0.3 | 1015 | 80.0 |

| | | | | | | | |
|---|---|---|---|---|---|---|---|
| * Reference Examples | | | | | | | |

As will be seen from Table 2, the monitor's evaluation of each of Samples Nos. 1 to 16 was above 80%, thus each sample was in good state. Samples Nos. 2 to 6 and Nos. 8 to 16, each of which had the added amount of the stabilizer in the range of not less than 1% by mol and less than 3% by mol, showed to have more than 1000 MPa of the three point bending strength, so that they were found to have an excellent mechanical properties. Samples Nos. 2 to 6 and Nos. 9 to 15, each of which had the added amount of the stabilizer in the range of not less than 1% by mol and less than 3% by mol and had the added amount of aluminum oxide (Al₂O₃) as the colorant in the range of not less than 0.3% by mass nor more than 5.0% by mass, were found that monitor's evaluation of these samples were not less than 85%, which were further better. In addition, samples Nos. 11 to 14, each of which had the added amount the stabilizer of 2% by mol and had the added amount of the colorant in the range of not less than 1.0% by mass nor more than 4.0% by mass, were found that each of them gave the high grade feeling to not less than 90% of the monitors.

### Example 3

Then, each of samples Nos. 1 to 16 in Example 2 was processed to have a thickness of 1.0 mm. And then, the light transmittance of each sample was measured using a spectrophotometer CM-3700d (manufactured by Konica Minolta Holdings Inc.,), in combination with a standard light source of D65 and a mask (LAV) having a measurement diameter phi of 25.4mm and a illuminating diameter of 28mm in the visible light having a wavelength from 360 nm to 740 nm at a viewing angle of 10 degree according to JIS Z 8722-2000.

As a result, although there was a tendency that the light transmittance increases as the wavelength becomes longer, it was confirmed that each sample of Samples Nos. 1 to 16 showed a light transmittance of not more than 20% in the visible light having the wavelength of not less than 360 nm nor more than 740 nm. Moreover, Samples Nos. 13 to 16, each of which had the added amount of aluminum oxide of not less than 3.0% by mass, had the light transmittance of not more than 15% in the visible light having the wavelength of not less than 580 nm nor more than 740 nm. When any process that any number or letter is applied to the sample and any of LEDs (light emitting diodes) having any color of yellow, orange or red is applied thereto as a back light, it was confirmed that the number or letter could be clearly illuminated through those samples.

### Example 4

Then, the white ceramic of the present invention, to which iron (Fe) was added as an accessory component of the colorant, was produced and the values of the lightness index L* and the chromaticness indices a* and b* in CIE1976 L*a*b* color space on each surface of the samples were measured according to JIS Z 8722-2000. In addition, the light transmittance was also measured.

The samples were prepared by adding iron (Fe) in each amount of 25ppm, 50ppm or 100ppm in Fe₂O₃ as the accessory component of the colorant to the composition similar to that of Sample 13 in Example 2, and then the procedure similar to that of Example 1 was performed. As a result, each of Samples Nos. 17 to 19 having a disk form having an outer diameter of 30 mm and a thickness of 5 mm was obtained. The values of the lightness index L* and the chromaticness indices a* and b* in CIE1976 L*a*b* color space on each surface of the samples of Samples Nos. 17 to 19 were measured according to JIS Z 8722-2000. The apparatus and the measurement conditions the same as those of Example 1 were uses.

With regard to the light transmittance, each of these samples was processed to have a thickness of 1.0 mm in the same manner as that of Example 3 and the light transmittance was measured according to JIS Z 8722-2000. Thereafter, the samples were numbered in order from lower to higher light transmittance.
The results are shown in Table 3.

**[Table 3]**

| Sample No. | added amount of Fe (ppm) | Lightness index L* | Chromaticness indices | | Light transmittance at the wavelength of 740 nm |
|---|---|---|---|---|---|
| | | | a* | b* | in ascending order |
| 13 | 0 | 85.5 | 0.3 | -0.5 | 4 |
| 17 | 25 | 85.1 | 0.2 | -0.3 | 3 |
| 18 | 50 | 84.5 | 0.1 | 0.6 | 2 |
| 19 | 100 | 83.2 | -0.2 | 2.3 | 1 |

As will be seen from Table 3, a little change was found in the values of lightness index L* and chromaticness indices a* and b* of the white ceramic by adding iron (Fe), however the light transmittance has been decreased. Although the reason is not apparent, iron (Fe) tends to easily form a compound with aluminum oxide (Al₂O₃) which is the main component of the colorant, so that it is conceivable that the formation of such compound could lower the transparency. Even when a decorative article would be processed to have a thin thickness using the white ceramic which has such light transmittance, the inside of the decorative article will not be seen through. Thus, it has been found that the present invention can provide a white ceramic which can give a high grade feeling, an impression of cleanliness, a feeling of aesthetic satisfaction, spiritual comfortableness and so on through the visual sense and is suitable.

### Example 5

Next, several samples were produced in which the sintering temperature of each sample was differed from each other in the range from 1340°C to 1560°C and the apparent density of each sample was measured. The samples were prepared using the raw material which has the composition similar to that of Sample 13 in Example 2. The sample was processed to form a compact in the procedure similar to that of Example 1, and then sintered at each sintering temperature as shown in Table 4. Thus, each of Samples Nos. 20 to 26, which has a disk form having an outer diameter of 30 mm and a thickness of 5 mm, was obtained. Each apparent density of these samples was measured according to JIS R 1634-1998.
The results are shown in Table 4.

**[Table 4]**

| Sample No. | sintering temperature (°C) | apparent density (g/cm³) |
|---|---|---|
| 20 | 1340 | 5.89 |
| 21 | 1350 | 5.90 |
| 22 | 1400 | 5.94 |
| 23 | 1450 | 5.98 |
| 24 | 1500 | 6.01 |
| 25 | 1550 | 6.10 |
| 26 | 1560 | 5.88 |

As shown in Table 4, the sintering temperature was as low as 1340°C and the sintering was insufficient in sample No. 20, thus the apparent density thereof was not more than 5.9 g/cm³. In sample No.26, the sintering temperature was as high as 1560°C and the growth of the crystal grain had occurred. Thus the apparent density thereof decreased. Comparing with these samples, samples Nos. 21 to 25, each of which had been subjected to sintering at the sintering temperature in the range of not less than 1350°C nor more than 1550°C, had been succeeded to achieve the desirable apparent density which is in the range of not less than 5.9 g/cm³ nor more than 6.1 g/cm³, to obtain high decorative values and to control the removal of the crystal grains. Thus, it has been found that these samples provided a preferable white ceramic, in which the mechanical properties had been improved.

### Example 6

Next, several samples, which were produced under different molding pressures through the dry pressure molding process using a pressure molding press apparatus, were formed and the maximum diameter of the open pores and the proportion of area occupied by the open pores thereof were measured.

The samples were prepared using the raw material which has the composition similar to that of Sample 13 in Example 2. These samples were processed in the procedure similar to that of Example 1 except for the molding pressure as shown in Table 5 and each of Samples Nos. 27 to 33, which had a disk form having an outer diameter of 30 mm and a thickness of 5 mm, was obtained. Each apparent density of these samples was measured according to JIS R 1634-1998.

In order to check the condition of the molding die when each of molding procedure performed under each molding pressure, one thousand of molded products were produced under each molding pressure using a brand-new molding die. The conditions of the molding die before and after the molding were checked. As a result of such check, the case where no defect was found in the condition of the molding die was rated as ○, the case where deformation was found in the molded products but molding had no defect was rated as Δ, and the case where any defect was found in the condition of the molding die was rated as x.

As to the maximum diameter of the open pores, a photo of the surface of the white ceramic of the present invention was taken with a metallographic microscope with magnifying power of 100 times. Then, the above photo was imaged with a CCD camera and the open pores existing in an area of 9X10⁻² (9*10⁻²) mm² in the image was observed and the open pore having the largest diameter was determined from the image. The above procedure, which is set as one cycle, is applied to the other observed portions and repeated for ten times (i.e. ten cycles) in total. According to the results of the ten cycles observation, the diameter of the largest open pore was determined to be the maximum diameter.

As to the proportion of area occupied by the open pores, a photo of the surface of the white ceramic of the present invention was taken with a metallographic microscope with magnifying power of 100 times in the manner similar to the observation of the maximum diameter of the open pores. Then, the above photo was imaged with a CCD camera and the open pores existing in an area of 9X10⁻²

(9*10⁻²) mm² in the image was observed and total area of the open pores was calculated. The obtained total area of the open pores was divided by the observed area (9*10-2 mm2), thereby the proportion of area occupied by open pores on the observed portion was obtained. The above procedure, which was set as one cycle, was applied to the other observed portions and repeated for ten times (i.e. ten cycles) in total. According to each value of the proportion of area occupied by the open pores, an average value was calculated, thereby the proportion of area occupied by the open pores was obtained.
The results are shown in Table 5.

**[Table 5]**

| Sample No. | Molding pressure (MPa) | Maximum diameter of the open pores (µm) | Proportion of area occupied by the open pores (%) | Condition of the molding die |
|---|---|---|---|---|
| 27 | 48 | 10.1 | 1.1 | ○ |
| 28 | 49 | 10.0 | 1.0 | ○ |
| 29 | 78 | 8.8 | 0.8 | ○ |
| 30 | 98 | 8.0 | 0.7 | ○ |
| 31 | 147 | 7.2 | 0.5 | ○ |
| 32 | 196 | 7.0 | 0.4 | ○ |
| 33 | 197 | 7.0 | 0.4 | Δ |

As shown in Table 5, the sample No. 27 had the maximum diameter of the open pores of not less than 10 µm the molding pressure thereof was so low as 48 MPa and had so large proportion of area occupied by the open pores not less than 1%. Thus, it could have a possibility to exert influence on the color tone. The sample No. 33 showed good values as to the maximum diameter of the open pores and the proportion of area occupied by the open pores. However, the molding pressure thereof was so high as 197MPa, so that the molding die was worn at some portions in the condition after one thousand of products had molded. On this condition, the service life of the molding die was so short that there was a possibility that a manufacturing cost could increase.

Comparing with the above samples, in the samples of Nos. 28 to 32, the molding dies thereof had no worn portions the products had the maximum diameter of the open pores not more than 10 µm, the proportion of area occupied by the open pores is not more than 1%, the shadow of the open pores are not visually recognized as color unevenness and the shadow of the open pores are not reflected over the entire surface. Thus, it was found that each of the samples Nos. 28 to 32 provides a white ceramic having an appropriate brightness on the color tone of the surface and having high decorative values including a high grade feeling, an impression of cleanliness and a feeling of aesthetic satisfaction.

As a result, it has been found that the white ceramic of the present invention can represent the white color which is highly regarded as a beautiful color with giving an impression of cleanliness, so that it also provides a high grade feeling and a feeling of aesthetic satisfaction, so that the white ceramic of the present invention gives spiritual comfortableness to the owner through visual sense.

In addition, each of the decorative article for watches, the decorative article for mobile phone, the decorative article for various livingwares, the decorative article for vehicles, the decorative article for sporting goods, the decorative article for musical instruments, the decorative article for accessories as shown in any of Figs. 1 to 15 was formed from the white ceramic of the present invention. In each case, it could produce a decorative article, which can be felt to provide a high grade feeling, a feeling of aesthetic satisfaction, spiritual comfortableness and so on through the visual sense due to representing the white color which gives an impression of cleanliness. Moreover, the white ceramic of the present invention does not allow the inside thereof to be seen through even when the wall thickness thereof is made thin and they successfully avoid deteriorating its decorative values due to darkening the color tone. Thus, it has been admitted that the white ceramic of the present invention provides a white ceramic having an appropriate brightness, so that it is suitably applied to the various decorative articles.

### BRIEF EXPLANATION OF THE DRAWINGS

Fig. 1 shows an example of a watch case, to which the decorative article for watch of the present invention is applied. Fig. 1(a) is a perspective view on the front surface of the watch case, and Fig. 1(b) is a perspective view on the back surface of the watch case.
Fig. 2 is a perspective view showing another example of the watch case, to which the decorative article for watch of the present invention is applied.
Fig. 3 is a schematic view showing an example of a construction of a watch band, to which the decorative article for watch of the present invention is applied.
Fig. 4 is a perspective view showing an example of a mobile phone, to which the decorative article for handheld device of the present invention is applied.
Fig. 5 is a perspective view showing a state where the housing of the mobile phone as shown in Fig. 4 is opened.
Fig. 6 is a schematic view showing an example of a soap case, which is a decorative article for livingwares of the present invention.
Fig. 7 is a perspective view showing an example of a coffee cup set, which is a decorative article for livingwares of the present invention.
Fig. 8 is a perspective view showing an example of a body of a vehicle, to which the decorative article for vehicles of the present invention is attached.
Fig. 9 is a front view showing an example of a corner pole of a vehicle, which is formed from the decorative article for vehicles of the present invention.
Fig. 10 is a front view showing an example of a golf club, to which the decorative article for sporting goods of the present invention is applied.
Fig. 11 is a bottom view showing an example of spiked shoes, to which the decorative article for sporting goods of the present invention is applied.
Fig. 12 is a perspective view showing an example of a guitar, to which the decorative article for musical instruments of the present invention is applied.
Fig. 13 is a schematic view showing an example of an artificial crown, to which the decorative article for accessories of the present invention is applied.
Fig. 14 is a front view showing an example of an earphone unit, to which the decorative article for accessories of the present invention is applied.
Fig. 15 is a perspective view showing an example of glasses, to which the decorative article for accessories of the present invention is applied.

### BRIEF DESCRIPTION OF REFERENCE NUMERALS

10A, 10B: Watch case
20: Inner link
30: Outer link
40: Pin
50: Watchband
60: Mobile phone
70: Liquid Crystal Display Unit
80: Soap Case
90: Coffee Cup Set
100: Body of Vehicle
110: Golf Club
120: Spiked Shoes
130: Guitar
141: Artificial Crown
150: Earphone Unit
160: Glasses

## Claims

1. A white ceramics comprising zirconium oxide containing a stabilizer and a colorant containing an aluminum oxide (Al₂O₃) as a main component,
wherein the content of the stabilizer is not less than 1% by mol and less than 3% by mol based on the zirconium oxide,
wherein the stabilizer is a compound which contains yttrium (Y), and
wherein the content of the aluminum oxide is 3.0% by mass or more based on 100% by mass of the zirconium oxide,
the white ceramics having a surface which has a lightness index L* not less than 83 nor more than 87, the chromaticness index a* not less than -1.5 nor more than 1.5 and the chromaticness index b* not less than -2.0 nor more than 3.0 in CIE1976 L*a*b* color space.

2. The white ceramics according to claim 1, containing iron (Fe) as an accessory component.

3. The white ceramics according to claim 1,
wherein a proportion of the average crystal grain sizes of the crystal of zirconia ceramic to the crystal of aluminum oxide is in a range of not less than 0.05 nor more than 0.5.

4. The white ceramics according to claim 1, having an apparent density not less than 5.9 g/cm³ nor more than 6.1 g/cm³.

5. The white ceramics according to claim 1, wherein the maximum diameter of the open pores on the surface is not more than 10 µm.

6. The white ceramics according to claim 1, wherein the proportion of area occupied by the open pores on the surface is not more than 1%.

7. A decorative article for watch, being formed from the white ceramics according to claim 1.

8. A decorative article for handheld device, which is formed from the white ceramics according to claim 1.

9. A decorative article for livingwares, being formed from the white ceramics according to claim 1.

10. A decorative article for vehicles, being formed from the white ceramics according to claim 1.

11. A decorative article for sporting goods, being formed from the white ceramics according to claim 1.

12. A decorative article for musical instruments, being formed from the white ceramics according to claim 1.

13. A decorative article for accessories, being formed from the white ceramics according to claim 1.

## Patentansprüche

1. Weiße Keramik, die Zirkoniumoxid umfasst, das einen Stabilisator und ein Farbmittel umfasst, das ein Aluminiumoxid (Al₂O₃) als eine Hauptkomponente enthält,
in der der Gehalt des Stabilisators nicht geringer ist als 1 mol% und geringer als 3 mol%, bezogen auf das Zirkoniumoxid,
wobei der Stabilisator eine Verbindung ist, die Yttrium (Y) enthält, und
wobei der Gehalt von Aluminiumoxid 3,0 Massen-% oder mehr ist, bezogen auf 100 Massen-% Zirkoniumoxid,
wobei die weiße Keramik eine Oberfläche hat, deren Helligkeitsindex L* nicht geringer als 83 und nicht höher als 87 ist, der Chromatizitätsindex a* nicht geringer als -1,5 und nicht höher als 1,5 ist, und der Chromatizitätsindex b* nicht geringer als -2,0 und nicht höher als 3,0 im CIE1976 L*a*b*-Farbraum ist.

2. Weiße Keramik nach Anspruch 1, die Eisen (Fe) als eine zusätzliche Komponente enthält.

3. Weiße Keramik nach Anspruch 1, in der das Verhältnis der durchschnittlichen Kristallkorngröße von dem Zirkoniumkeramikkristall zu dem Aluminiumoxidkristall im Bereich von nicht weniger als 0,05 und nicht mehr als 0,5 ist.

4. Weiße Keramik nach Anspruch 1, die eine Dichte von nicht weniger als 5,9 g/·cm³ und nicht höher als 6,1 g/cm³ hat.

5. Weiße Keramik nach Anspruch 1, in der der Maximaldurchmesser der offenen Poren auf der Oberfläche nicht größer ist als 10 µm.

6. Weiße Keramik nach Anspruch 1, in der der Flächenanteil, der durch offene Poren auf der Oberfläche belegt ist, nicht höher als 1 % ist.

7. Dekorartikel für eine Uhr, der aus der weißen Keramik nach Anspruch 1 gebildet ist.

8. Dekorartikel für eine tragbare Vorrichtung, der aus der weißen Keramik nach Anspruch 1 gebildet ist.

9. Dekorartikel für Gebrauchsgegenstände, der aus der weißen Keramik nach Anspruch 1 gebildet ist.

10. Dekorartikel für Fahrzeuge, der aus der weißen Keramik nach Anspruch 1 gebildet ist.

11. Dekorartikel für Sportgegenstände, der aus der weißen Keramik nach Anspruch 1 gebildet ist.

12. Dekorartikel für Musikinstrumente, der aus der weißen Keramik nach Anspruch 1 gebildet ist.

13. Dekorartikel für Utensilien, der aus der weißen Keramik nach Anspruch 1 gebildet ist.

## Revendications

1. Céramique blanche comprenant de l'oxyde de zirconium contenant un stabilisant et un colorant contenant un oxyde d'aluminium (Al₂O₃) à titre de composant principal,
dans laquelle la teneur du stabilisant est d'au moins 1 % en moles et ne dépasse pas 3 % en moles par rapport à l'oxyde de zirconium,
dans laquelle le stabilisant est un composé qui contient de l'yttrium (Y), et
dans laquelle la teneur en oxyde d'aluminium est de 3,0 % en masse ou plus pour 100 % en masse de l'oxyde de zirconium,
la céramique blanche ayant une surface qui a un indice de luminosité L* non inférieur à 83 et non supérieur à 87, un indice de chromaticité a* non inférieur à -1,5 et non supérieur à 1,5, et un indice de chromaticité b* non inférieur à -2,0 et non supérieur à 3,0, dans l'espace colorimétrique L*a*b* CIE1976.

2. Céramique blanche selon la revendication 1, contenant du fer (Fe) à titre de composant accessoire.

3. Céramique blanche selon la revendication 1,
dans laquelle la proportion des dimensions moyennes de grain cristallin du cristal de céramique à base de zircone par rapport à celles du cristal d'oxyde d'aluminium est située dans la plage allant d'au moins 0,05 à au plus 0,5.

4. Céramique blanche selon la revendication 1, ayant une masse volumique apparente d'au moins 5,9 g/cm³ et d'au plus 6,1 g/cm³.

5. Céramique blanche selon la revendication 1, dans laquelle le diamètre maximal des pores ouverts sur la surface ne dépasse pas 10 µm.

6. Céramique blanche selon la revendication 1, dans laquelle la proportion de surface occupée par les pores ouverts sur la surface ne dépasse pas 1 %.

7. Article décoratif pour montre, qui est formé à partir de la céramique blanche selon la revendication 1.

8. Article décoratif pour terminal mobile, qui est formé à partir de la céramique blanche selon la revendication 1.

9. Article décoratif pour objets domestiques, qui est formé à partir de la céramique blanche selon la revendication 1.

10. Article décoratif pour véhicules, qui est formé à partir de la céramique blanche selon la revendication 1.

11. Article décoratif pour articles de sport, qui est formé à partir de la céramique blanche selon la revendication 1.

12. Article décoratif pour instruments de musique, qui est formé à partir de la céramique blanche selon la revendication 1.

13. Article décoratif pour accessoires, qui est formé à partir de la céramique blanche selon la revendication 1.
